# FASCICULE DE BREVET EUROPEEN

(11) **EP 1 160 435 B1**
(45) Date de publication et mention de la délivrance du brevet: **29.09.2004**
(21) Numéro de dépôt: 01400952.6
(22) Date de dépôt: 12.04.2001
(51) Int. Cl.: F02D 41/02, F02D 41/40, F01N 3/023

(54) **Système d'aide à la régénération d'un filtre à particules intégré dans une ligne d'échappement d'un moteur Diesel de véhicule automobile**
System für die Unterstützung der Regeneration eines Partikelfilters enthalten in der Auspuffslinie eines Dieselfahrzeugmotors
System for assisting the regeneration of a particle filter comprised in the exhaust pipe of a diesel vehicle engine

(30) Priorité: 30.05.2000 FR 0006943
(43) Date de publication de la demande: 05.12.2001
(73) Titulaire: Peugeot Citroen Automobiles SA, 92200 Neuilly sur Seine (FR)
(72) Inventeur: Le Tallec, Patrice, 78500 Sartrouville (FR)
(74) Mandataire: Habasque, Etienne Joel Jean-François

(56) Documents cités:
- EP-A- 0 661 429
- EP-A- 0 952 321
- DE-A- 19 836 053
- FR-A- 2 774 427
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- PATENT ABSTRACTS OF JAPAN vol. 1999, no. 03, 31 mars 1999 (1999-03-31) & JP 10 318030 A (KAWASAKI HEAVY IND LTD), 2 décembre 1998 (1998-12-02)

## Description

La présente invention concerne un système d'aidé à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Le document DE-19836053 décrit par example l'utilisation d'un catalyseur de réduction.

Différents systèmes ont déjà été développés dans l'état de la technique pour réduire le niveau de ces émissions polluantes en particulier en utilisant un filtre à particules intégré dans la ligne d'échappement.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, caractérisé en ce que le moteur est associé à différents organes, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, sous la forme d'au moins une injection pilote et une injection principale de carburant, comportant des injecteurs à commande électrique associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, et
- des moyens de contrôle du fonctionnement des moyens d'admission, des moyens de recyclage, du turbocompresseur et/ou du système d'alimentation pour contrôler le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle sont adaptés pour déclencher ladite injection pilote de carburant dans une plage du cycle moteur s'étendant entre 40° avant le point mort haut et 10° après celui-ci, ladite injection principale entre 25° avant le point mort haut et 20° après celui-ci et les injections multiples entre 10° après le point mort haut du moteur et 180° après celui-ci.

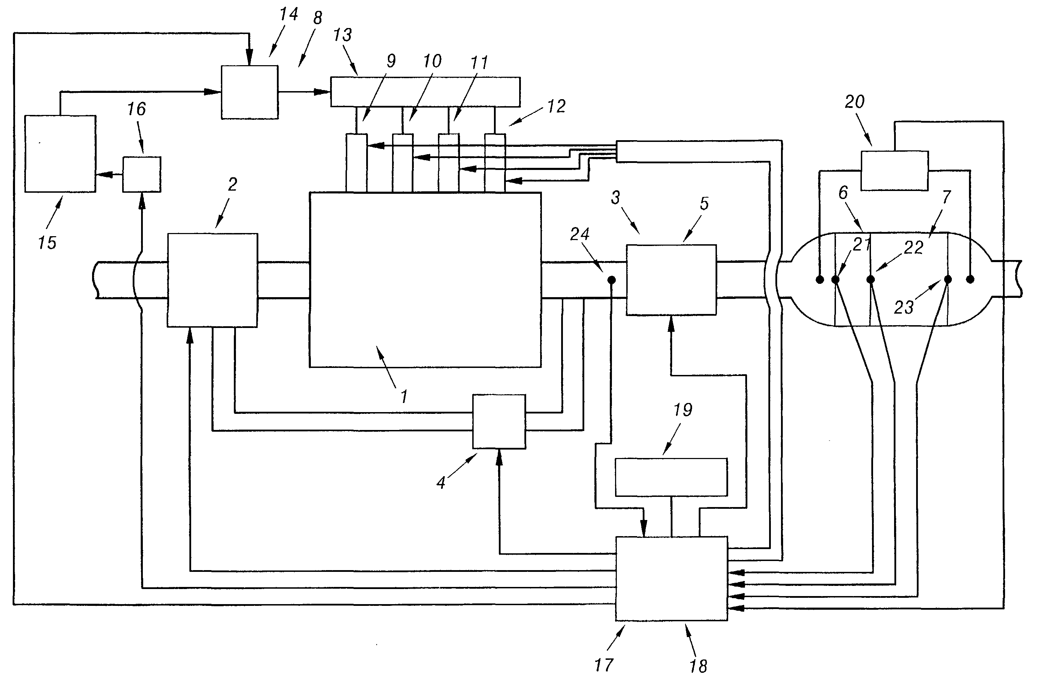

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci ;

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

De façon classique, le carburant est injecté dans chaque cylindre sous la forme d'au moins une injection pilote et une injection principale de carburant décalées dans le cycle moteur.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15 pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont alors adaptés pour provoquer ladite injection pilote de carburant dans une plage du cycle moteur s'étendant entre 40° avant le point mort haut et 10° après celui-ci, ladite injection principale entre 25° avant le point mort haut et 20° après celui-ci et les injections multiples entre 10° après le point mort haut du moteur et 180° après celui-ci.

On notera que les injections pilote et principale peuvent être retardées ou non dans le cycle moteur selon qu'une phase de régénération du filtre à particules est déclenchée ou non.

Dans le cas où une régénération est déclenchée, les injections pilote et principale peuvent donc être déphasées dans le cycle moteur par rapport à un fonctionnement sans régénération.

De plus, l'écart entre les injections pilote et principale peut ou non être constant selon que la phase de régénération est déclenchée ou non.

Ces injections tardives permettent alors d'augmenter la température des gaz d'échappement pour favoriser le déclenchement de la régénération du filtre.

## Revendications

1. Système d'aide à la régénération d'un filtre à particules intégré dans une ligne d'échappement d'un moteur Diesel de véhicule automobile, **caractérisé en ce que** le moteur (1) est associé à différents organes, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, sous la forme d'au moins une injection pilote et une injection principale de carburant, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, et
- des moyens (17) de contrôle du fonctionnement des moyens d'admission, des moyens de recyclage, du turbocompresseur et/ou du système d'alimentation pour contrôler le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et **en ce que** les moyens de contrôle (17) sont adaptés pour déclencher ladite injection pilote de carburant dans une plage du cycle moteur s'étendant entre 40° avant le point mort haut et 10° après celui-ci, ladite injection principale entre 25° avant le point mort haut et 20° après celui-ci et les injections multiples entre 10° après le point mort haut et 180° après celui-ci.

2. Système selon la revendication 1, **caractérisé en ce que** les injections pilote et principale sont décalées dans le cycle moteur lorsqu'une phase de régénération est déclenchée par rapport à un fonctionnement sans régénération.

3. Système selon la revendication 1 ou 2, **caractérisé en ce que** l'écart entre les injections pilote et principale est constant, qu'une régénération soit déclenchée ou non.

## Claims

1. System of assisting the regeneration of a particle filter integrated into an exhaust pipe of an engine of a diesel motor vehicle, **characterised in that** the engine (1) is connected to various elements, including:
• means (2) for the intake of air into the engine;
• means (4) for recycling exhaust gas of the engine as inlet therein;
• a turbo-compressor (5);
• an oxidation catalyst (6) disposed upstream of the particle filter (7) in the exhaust pipe;
• a joint feed system (8) for fuel to the cylinders of the engine in the form of at least one pilot and one main fuel injection, comprising electrically controlled injectors (9, 10, 11, 12) connected to these cylinders;
• means (16) for adding an additive to the fuel to be deposited in the particle filter (7) to lower the combustion temperature of the particles trapped therein;
• means (20, 21, 22, 23, 24) for acquiring data relating to various operating parameters of the engine and elements connected thereto, and
• means (17) for controlling the operation of the intake means, the recycling means, the turbo-compressor and/or the feed system to control the operation of the engine, these means being additionally adjusted to actuate a regeneration phase of the particle filter by combustion of the particles trapped therein by actuating a phase of multiple injections of fuel in the cylinder of the engine during their relief phase,
and **in that** the control means (17) are adjusted to trigger said pilot injection of fuel in an engine cycle range extending between 40° before the top dead centre and 10° thereafter, said main injection between 25° before the top dead centre and 20° thereafter and multiple injections between 10° after the top dead centre and 180° thereafter.

2. System according to Claim 1, **characterised in that** when a regeneration phase has been actuated, the pilot and maininjections are shifted in the engine cycle in relation to an operation without regeneration.

3. System according to Claim 1 or 2, **characterised in that** the interval between the pilot and main injections is constant, whether a regeneration has been actuated or not.

## Patentansprüche

1. System zum Unterstützen der Regeneration eines in die Auspuff-Linie eines Kraftfahrzeug-Dieselmotors integrierten Partikel-Filters, **dadurch gekennzeichnet, dass** dieser Motor (1) mit verschiedenen Organen verbunden ist, aufweisend:
- Vorrichtungen (2) zum Einlassen von Luft in den Motor,
- Vorrichtungen (4) zum Rückführen von Auspuff-Gas des Motors zu dessen Eingang,
- einen Turbo-Kompressor (5),
- einen Oxidations-Katalysator (6), welcher in Flussrichtung vor dem Partikel-Filter (7) in der Auspuff-Linie angeordnet ist;
- ein gemeinsames System (8) zum Versorgen der Zylinder des Motors mit Brennstoff, in Form von wenigstens einer Pilot-Einspritzung und einer Haupt-Einspritzung von Brennstoff, aufweisend mit seinen Zylindern verbundene elektrisch gesteuerte Einspritz-Vorrichtungen (9, 10, 11, 12).
- Vorrichtungen (16) zum Zuführen eines Additivs zum Brennstoff, dazu vorgesehen, sich auf dem Partikel-Filter (7) niederzuschlagen, um die VerbrennungsTemperatur der von diesem aufgefangenen Partikel zu erniedrigen.
- Vorrichtungen (20, 21, 22, 23, 24) zum Gewinnen von Informationen bezüglich verschiedener Parameter des Betriebs des Motors und von mit diesem verbundenen Organen, und
- Vorrichtungen (17) zum Steuern des Betriebs der Einlass-Vorrichtungen, der Rückführ-Vorrichtungen, des Turbo-Kompressors und/oder des Versorgungs-Systems zum Steuern des Betriebs des Motors, wobei diese Vorrichtungen andererseits dazu geeignet sind, eine Phase der Regeneration des Partikel-Filters durch Verbrennen der in diesem aufgefangenen Partikel auszulösen, indem eine Phase von Mehrfach-Einspritzungen von Brennstoff in die Zylinder des Motors während ihrer Expansions-Phase in Gang gesetzt wird, und dadurch, dass die SteuerVorrichtungen (17) dazu geeignet sind, die genannte Pilot-Einspritzung von Brennstoff in einem Bereich des Motor-Zyklus, welcher sich zwischen 40° vor dem oberen Todpunkt und 10° nach diesem erstrecket, die Haupt-Einspritzung zwischen 25° vor dem oberen Todpunkt und 20° nach diesem, und die Mehrfach-Einspritzungen zwischen 10° nach dem oberen Todpunkt und 180° nach diesem auszulösen.

2. System gemäß Anspruch 1, **dadurch gekennzeichnet, dass** die Pilot-Einspritzung und die Haupt-Einspritzung in dem Motor-Zyklus bei einer ausgelösten Regenerations-Phase gegenüber einem Betrieb ohne Regeneration versetzt sind.

3. System gemäß Anspruch 1 oder 2, **dadurch gekennzeichnet, dass** der Abstand zwischen der Pilot-Einspritzung und der Haupt-Einspritzung konstant ist, unabhängig davon, ob eine Regeneration ausgelöst ist oder nicht.
